# EUROPÄISCHE PATENTSCHRIFT

(11) **EP 4 227 117 B1**
(45) Veröffentlichungstag und Bekanntmachung des Hinweises auf die Patenterteilung: **27.11.2024**
(21) Anmeldenummer: 23150665.0
(22) Anmeldetag: 09.01.2023
(51) Int. Cl.: B60C 11/12, B60C 11/13

(54) **FAHRZEUGLUFTREIFEN**
PNEUMATIC TYRE FOR VEHICLES
BANDAGE PNEUMATIQUE POUR VÉHICULE

(30) Priorität: 09.02.2022 DE 102022201349
(43) Veröffentlichungstag der Anmeldung: 16.08.2023
(73) Patentinhaber: Continental Reifen Deutschland GmbH, 30175 Hannover (DE)
(72) Erfinder: Wanka, Thomas, 30165 Hannover (DE); Herbst, Stephan, 30165 Hannover (DE); Rittweger, Stefan, 30165 Hannover (DE)
(74) Vertreter: Continental Corporation

(56) Entgegenhaltungen:
- DE-A1- 102018 208 670
- DE-A1- 102019 214 093
- JP-A- 2017 074 845
- JP-A- 2021 133 731
- US-A1- 2018 015 788
- US-A1- 2018 170 114
- US-A1- 2019 001 753

## Beschreibung

Die Erfindung betrifft einen Fahrzeugluftreifen mit einem Laufstreifen mit zumindest einer beidseitig durch je eine Umfangsrille begrenzten Profilrippe mit einer Rippenaußenfläche und durchquerenden, jeweils zwei Einschnittwände, eine Breite von 0,4 mm bis 2,0 mm und eine maximale Tiefe von zumindest 70% der Profiltiefe aufweisenden Einschnitten, welche in Draufsicht jeweils einen ersten Einschnittabschnitt und einen an diesen anschließenden, in die eine Umfangsrille einmündenden, zweiten Einschnittabschnitt sowie am Anschluss der Einschnittabschnitte eine Knickstelle aufweisen, wobei an jedem Einschnitt eine von der Rippenaußenfläche ausgehende, über den gesamten ersten Einschnittabschnitt verlaufende, erste fasenartige Erweiterung und eine von der Rippenaußenfläche ausgehende, über den gesamten zweiten Einschnittabschnitt verlaufende, zweite fasenartige Erweiterung ausgebildet sind, wobei jede fasenartige Erweiterung eine über ihre gesamte Erstreckung reichende Schrägfläche mit einer an der Rippenaußenfläche liegenden Begrenzungskante aufweist, wobei die erste und zweite fasenartige Erweiterung an dieselbe Einschnittwand angrenzen und wobei die Begrenzungskanten der Schrägflächen an der Rippenaußenfläche aneinander anschließen.

Ein derartiger Fahrzeugluftreifen ist beispielsweise aus der JP 2021 133 731 A bekannt. Gemäß einem Ausführungsbeispiel weist der Reifen einen Laufstreifen mit einer halbmittigen Profilrippe auf, welche mit durchquerenden Einschnitten mit einer Breite von bis zu 1,5 mm und einer maximalen Tiefe von 60% bis 80% der Profiltiefe versehen ist. Die Einschnitte setzen sich, in Draufsicht betrachtet, jeweils aus einem ersten Einschnittabschnitt und einem zweiten Einschnittabschnitt zusammen, wobei am Anschluss der Einschnittabschnitte eine Knickstelle vorliegt. An jeder Seite der Einschnitte ist jeweils eine über den ersten Einschnittabschnitt verlaufende, erste fasenartige Erweiterung und jeweils eine über den zweiten Einschnittabschnitt verlaufende, zweite fasenartige Erweiterung ausgebildet. Die fasenartigen Erweiterungen sind von Schrägflächen gebildet, deren an der Rippenaußenfläche liegenden Begrenzungskanten aneinander anschließen. Die fasenartigen Erweiterungen sollen im Hinblick auf das Abriebverhalten günstig sein.

Aus der US 2018/0015788 A1 ist ein Fahrzeugluftreifen mit einem Laufstreifen mit einer halbmittigen Profilrippe bekannt, welche mit durchquerenden Einschnitten mit einer Breite von bis zu 1,2 mm versehen ist, wobei sich die Einschnitte, in Draufsicht betrachtet, jeweils aus einem ersten Einschnittabschnitt und einem zweiten Einschnittabschnitt zusammensetzen, wobei am Anschluss der Einschnittabschnitte eine Knickstelle vorliegt. An jedem Einschnittabschnitt sind zwei einander gegenüberliegende, je von einer Schrägfläche gebildete, fasenartige Erweiterungen vorgesehen. Die im Querschnitt des Einschnitts vorliegende Breite der Schrägfläche nimmt ausgehend in Richtung der Rippenmittellinie ab.

Aus der DE 10 2018 208 670 A1 ist ein Fahrzeugluftreifen bekannt, welcher gemäß einem Ausführungsbeispiel einen Laufstreifen mit einer mittleren Profilrippe mit durchquerenden Einschnitten aufweist, wobei sich die Einschnitte, in Draufsicht betrachtet, jeweils aus einem kreisbogenförmig verlaufenden, zentralen Einschnittabschnitt und zwei unmerklich gebogen verlaufenden, randseitigen Einschnittabschnitten zusammensetzen. An den gegenseitigen Anschlüssen der Einschnittabschnitte weisen die Einschnitte je eine Knickstelle auf. Über jeden Einschnittabschnitt verläuft jeweils eine fasenartige Erweiterung, wobei die an den randseitigen Einschnittabschnitten ausgebildeten fasenartigen Erweiterungen an die eine Einschnittwand angrenzen und die am zentralen Einschnittabschnitt ausgebildete fasenartige Erweiterung an die andere Einschnittwand angrenzt. Die fasenartigen Erweiterungen sollen für die Entwässerung der Profilrippe von Vorteil sein, insbesondere soll eine verwirbelungsarme Wassereinströmung in den Einschnitt ermöglicht und die Entwässerung der Profilrippe verbessert sein.

Bei Laufstreifen von Fahrzeugluftreifen der eingangs genannten Art reduzieren die in der Profilrippe ausgebildeten, durchquerenden Einschnitte die Steifigkeit der Profilrippe, was im Hinblick auf die Fahreigenschaften auf trockener Fahrbahn nicht optimal ist. Da die Einschnitte am gegenseitigen Anschluss ihrer Einschnittabschnitte eine Knickstelle aufweisen, können sich die durch die Einschnitte gebildeten Rippensegmente unter Querbelastung gegenseitig abstützen, wodurch die erwähnte mit den Einschnitten einhergehende Reduktion der Steifigkeit der Profilrippe merklich kompensiert wird, was für die Kraftübertragung zum Untergrund, beispielsweise für das Trockenhandling, vorteilhaft ist. Die fasenartigen Erweiterungen wirken in bekannter Weise einem "Einrollen" der entsprechenden Kanten entgegen, wodurch Vorteile für die Bremseigenschaften auf trockener Fahrbahn erzielt werden. Im Hinblick auf die Nässeperformance im Bereich der Profilrippe besteht weiterhin Optimierungsbedarf, insbesondere um beim Fahren auf nasser Fahrbahn die Bildung eines die Nässeperformance beeinträchtigen Wasserfilms auf der Rippenaußenfläche wirkungsvoll zu unterdrücken.

Der Erfindung liegt daher die Aufgabe zugrunde, bei einem Fahrzeugluftreifen der eingangs genannten Art die Nässeperformance unter Beibehaltung guter Bremseigenschaften auf trockener Fahrbahn weiter zu verbessern.

Gelöst wird die gestellte Aufgabe erfindungsgemäß dadurch, dass die Schrägflächen am gegenseitigen Anschluss der Begrenzungskanten auslaufen, wobei die erste und zweite fasenartige Erweiterung jeweils eine an die Schrägfläche anschließende, zur Einschnittwand verlaufende, in Draufsicht langgestreckte Plateaufläche mit einer Breite von 0,4 mm bis 0,8 mm aufweist, wobei die Plateaufläche am gegenseitigen Anschluss der Begrenzungskanten der Schrägflächen am Niveau der Rippenaußenfläche endet und von dort ausgehend, zumindest über einen Plateauflächenabschnitt, im Längsschnitt durch den Einschnitt betrachtet, ins radial Innere abfällt.

Die Schrägflächen weisen somit an der Rippenaußenfläche zusammenlaufende Spitzen auf. An diesen Spitzen wird beim Fahren auf nasser Fahrbahn der sich auf der Rippenaußenfläche bildende Wasserfilm besonders schnell und wirkungsvoll "aufgebrochen" bzw. unterbrochen. Ausgehend von dieser Stelle wird das Wasser über die breiter werdenden Schrägflächen in den jeweiligen Einschnitt und anschließend in die Umfangsrillen abgeleitet. Die Wasserableitung von der Rippenaußenfläche ins Innere des Einschnittes ist somit besonders begünstigt, wodurch die Nässeperformance weiter verbessert ist. Beispielsweise werden beim Fahren auf nasser Fahrbahn Querkräfte besser als bisher übertragen. Gute Bremseigenschaften auf trockener Fahrbahn bleiben durch die Schrägflächen erhalten. Die Plateaufläche unterstützt beim Fahren auf nasser Fahrbahn das Aufbrechen des Wasserfilms und wirkt in dieser Hinsicht auf synergistische Weise mit den Schrägflächen zusammen. Die Neigung der Plateaufläche begünstigt den Wasserfluss in Richtung zum jeweiligen Einschnittende und somit in die entsprechende Umfangsrille.

Gemäß einer bevorzugten Ausführung sind die erste und zweite fasenartige Erweiterung an der über die Außenseite der Knickstelle verlaufenden Einschnittwand ausgebildet.

Gemäß einer weiteren bevorzugten Ausführung schließen der erste Einschnittabschnitt und der zweite Einschnittabschnitt, in Draufsicht betrachtet und bezogen auf die Einschnittmittellinie, einen Winkel von 150° bis 170°, insbesondere von 155° bis 168°, ein. Bei eine derartigen Winkelung können sich die durch die Einschnitte gebildeten Rippensegmente unter Querbelastung auf vorteilhafte Weise gegenseitig abstützen, was für die Kraftübertragung zum Untergrund vorteilhaft ist, wobei gleichzeitig - aufgrund des relativ großen Winkels - der gegenseitige Anschlussbereich der Einschnittabschnitte auf verwirbelungsarme Weise von Wasser passierbar ist, was wiederum für die Nässeperformance günstig ist.

Eine weitere bevorzugten Ausführung ist dadurch gekennzeichnet, dass der erste Einschnittabschnitt, in Draufsicht betrachtet, über den Großteil des Einschnittes verläuft und die Rippenmittellinie der Profilrippe passiert. Bei dieser Ausführung ist die erläuterte Wirkung der Schrägfläche im Bereich des ersten Einschnittabschnittes besonders ausgeprägt.

Nachfolgend wird auf besonders vorteilhafte, miteinander kombinierbare Varianten der zuletzt genannten Ausführung eingegangen.

Gemäß einer ersten vorteilhaften Variante der zuletzt genannten Ausführung sind Einschnitte vorgesehen, welche sich in Draufsicht aus dem ersten Einschnittabschnitt, dem zweiten Einschnittabschnitt und einem in die andere Umfangsrille einmündenden, dritten Einschnittabschnitt zusammensetzen, wobei der erste und der zweite Einschnittabschnitt bezüglich der axialen Richtung gleichsinnig und der dritte Einschnittabschnitt zum ersten und zweiten Einschnittabschnitt bezüglich der axialen Richtung gegensinnig geneigt ist und wobei der erste Einschnittabschnitt und der dritte Einschnittabschnitt, bezogen auf die Einschnittmittellinie, einen Winkel von 100° bis 120° einschließen. Solche Einschnitte sind für die unter Querbelastung stattfindende gegenseitige Abstützung der Rippensegmente besonders günstig, verbessern somit die Kraftübertragung zum Untergrund und tragen, vor allem wenn gleichzeitig eine Querbelastung auftritt, zur Beibehaltung guter Bremseigenschaften auf trockener Fahrbahn bei.

Bei der ersten vorteilhaften Variante ist es bevorzugt, wenn die erste fasenartige Erweiterung bis zum dritten Einschnittabschnitt reicht, wodurch der Effekt der ersten fasenartigen Erweiterung besonders ausgeprägt ist.

Ferner ist es bei der ersten vorteilhaften Variante bevorzugt, wenn der erste Einschnittabschnitt - bezogen auf die Einschnittmittellinie - in Draufsicht betrachtet, zur axialen Richtung unter einem Winkel von 40° bis 50° verläuft und am Niveau der Rippenaußenfläche eine in die axiale Richtung projizierte Länge von 45% bis 60%, insbesondere von 50% bis 55%, der am Niveau der Rippenaußenfläche in axialer Richtung ermittelten Breite der Profilrippe aufweist. Dies verbessert die unter Querbelastung stattfindende gegenseitig Abstützung der Rippensegmente weiter.

Darüber hinaus ist es bei der ersten vorteilhaften Variante günstig, wenn der dritte Einschnittabschnitt - bezogen auf die Einschnittmittellinie - am Niveau der Rippenaußenfläche eine in die axiale Richtung projizierte Länge von zumindest 2,0 mm, insbesondere von zumindest 2,5 mm, aufweist.

Außerdem ist es bei der ersten vorteilhaften Variante günstig, wenn die Schrägfläche der ersten fasenartigen Erweiterung einen den gesamten ersten Einschnittabschnitt entlangverlaufenden, langezogen dreieckigen Schrägflächenabschnitt aufweist, welcher am gegenseitigen Anschluss der Begrenzungskanten der Schrägflächen ausläuft.

Gemäß einer zweiten vorteilhaften Variante der zuletzt genannten Ausführung sind Einschnitte vorgesehen, welche sich in Draufsicht aus dem ersten Einschnittabschnitt und dem zweiten Einschnittabschnitt zusammensetzen, wobei der erste und der zweite Einschnittabschnitt bezüglich der axialen Richtung gleichsinnig geneigt sind. Diese Einschnittausgestaltung ist vor allem für die Nässeperformance besonders günstig.

Bei der zweiten vorteilhaften Variante ist es bevorzugt, wenn der erste Einschnittabschnitt - bezogen auf die Einschnittmittellinie - am Niveau der Rippenaußenfläche eine in die axiale Richtung projizierte Länge von 60% bis 80%, insbesondere von 65% bis 75%, der am Niveau der Rippenaußenfläche in axialer Richtung ermittelten Breite der Profilrippe aufweist.

Ferner ist es bei der zweiten vorteilhaften Variante bevorzugt, wenn sich die Schrägfläche der ersten fasenartigen Erweiterung aus einem langezogen dreieckigen Schrägflächenabschnitt, welcher am gegenseitigen Anschluss der Begrenzungskanten der Schrägflächen ausläuft, und einem den Großteil der Schrägfläche einnehmenden langgezogenen, rechteckförmigen Schrägflächenabschnitt zusammensetzt.

Eine weitere bevorzugte Ausführung ist dadurch gekennzeichnet, dass die Profilrippe an der Umfangsrille, in welche der zweite Einschnittabschnitt einmündet, eine zur Rippenaußenfläche verrundete Rippenflanke mit einer tangential an die Rippenaußenfläche anschließenden Übergangsrundung aufweist, wobei die zweite fasenartige Erweiterung in radialer Richtung von einer zur Umfangsrille reichenden Bodenfläche mit einer ausgehend von der Umfangsrille kontinuierlich abnehmenden Breite mitbegrenzt ist, wobei an die an der Rippenaußenfläche liegende Begrenzungskante der Schrägfläche eine über die Übergangsrundung verlaufende, bogenförmige Begrenzungskante der Schrägfläche anschließt, wobei die Schrägfläche im an die bogenförmige Begrenzungskante anschließenden Bereich nach außen gebogen ist und sich entlang der bogenförmigen Begrenzungskante derart verdreht, dass sie an ihrem der Bodenfläche zugewandten Ende, in Draufsicht betrachtet, zur axialen Richtung unter einem Winkel von 5° bis 25°, insbesondere von 10° bis 20°, verläuft.

Bei dieser Ausführung ist die zweite fasenartige Erweiterung kerbenförmig ausgebildet. Bei fortschreitendem Laufstreifenabrieb bleibt von der kerbenförmigen fasenartigen Erweiterung ein verhältnismäßig großes Volumen erhalten, sodass beim Fahren auf nasser Fahrbahn die Entwässerung der Profilrippe zur Umfangsrille begünstigt und derart die Nässeperformance weiter verbessert ist.

Eine weitere bevorzugte Ausführung besteht darin, dass die Einschnittwand, welche der Einschnittwand, an welcher die fasenartigen Erweiterungen ausgebildet sind, gegenüberliegt, an einer an der der Rippenaußenfläche ausgebildeten, bis zu den Umfangsrillen reichenden Begrenzungskante endet. An der zweiten Einschnittwand sind also keine fasenartigen Erweiterungen ausgebildet, sodass die Einschnittkanten scharfe "Nassgriffkanten" bilden, welche beim Fahren auf nasser Fahrbahn die Unterbrechung des sich auf der Außenfläche der Profilrippe bildenden Wasserfilms begünstigen und derart auf besonders vorteilhafte Weise mit den gegenüberliegenden Schrägflächen zusammenwirken.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen in die Ebene abgewickelten Ausschnitt eines Laufstreifens eines Fahrzeugluftreifens mit einer Ausführungsvariante der Erfindung,
Fig. 2 einen Schnitt entlang der Linie II-II der Fig. 1,
Fig. 3 einen Schnitt entlang der Linie III-III der Fig. 1,
Fig. 4 eine vergrößerte Draufsicht auf das Detail Z₄ der Fig. 1,
Fig. 5 einen Schnitt entlang jeder Linie V-V der Fig. 4,
Fig. 6 einen Schnitt entlang der Linie VI-VI der Fig. 4,
Fig. 7 einen Schnitt entlang der Linie VII-VII der Fig. 4, wobei zusätzlich eine Einschnittkontur angedeutet ist,
Fig. 8 einen Schnitt entlang der Linie VIII-VIII der Fig. 4, wobei zusätzlich eine Einschnittkontur angedeutet ist und
Fig. 9 eine weiter vergrößerte Ansicht gemäß der in Fig. 4 durch den Pfeil S₉ angedeuteten Sichtrichtung.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t).

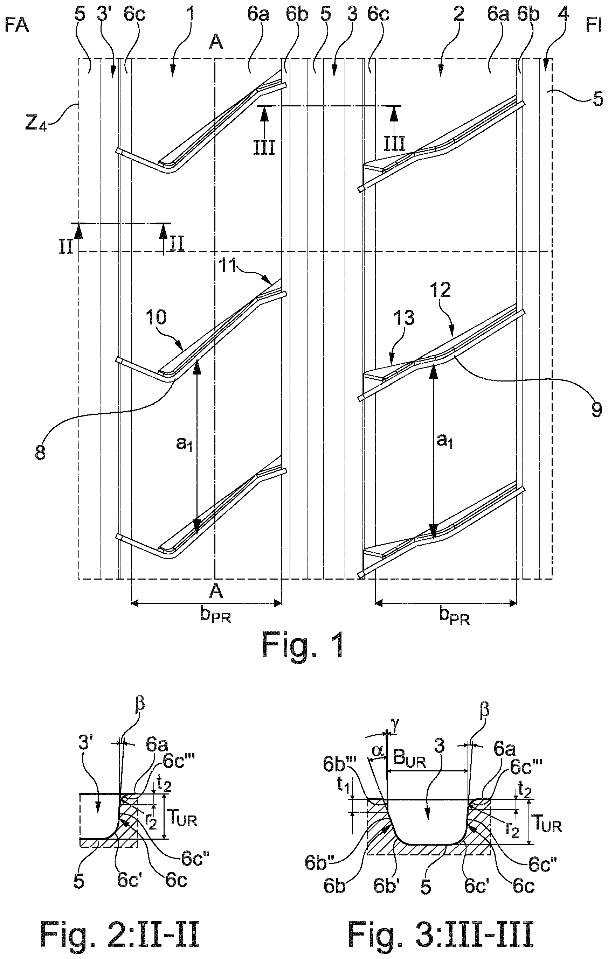

Fig. 1 zeigt eine Draufsicht auf einen Ausschnitt eines Umfangsabschnittes eines Laufstreifens eines Fahrzeugluftreifens. Die Reifenäquatorialebene ist durch eine Linie A-A angedeutet. Der Laufstreifen weist eine im Bereich der Reifenäquatorialebene verlaufende, mittlere Profilrippe 1 und eine mittlere Profilrippe 2 auf, wobei die mittlere Profilrippe 1 zur mittleren Profilrippe 2 durch eine mittlere Umfangsrille 3 getrennt und an ihrer der mittleren Profilrippe 2 abgewandten Seite durch eine mittlere Umfangsrille 3' begrenzt ist. Die mittlere Profilrippe 2 ist laufstreifeninnenseitig von der mittleren Umfangsrille 3 und laufstreifenaußenseitig von einer schulterseitigen Umfangsrille 4 begrenzt. Die nicht gezeigten Bereiche des Laufstreifens können in bekannter Weise ausgeführt sein.

Die Umfangsrillen 3, 3', 4 sind in radialer Richtung jeweils in der vorgesehenen Profiltiefe T_{UR} (Fig. 2: Umfangsrille 3`, Fig. 3: Umfangsrille 3) ausgeführt, welche für den bevorzugten Reifentyp üblicherweise 6,5 mm bis 13,0 mm beträgt, weisen an der Laufstreifenperipherie in axialer Richtung jeweils eine Breite B_{UR} (Fig. 3: Umfangsrille 3) von 6,0 mm bis 13,0 mm sowie jeweils einen auf der Profiltiefe T_{UR} verlaufenden Rillengrund 5 (vergl. Fig. 2, Fig. 3) auf. Sind die Umfangsrillen 3, 3`, 4 verschieden tief ausgeführt, wird unter der Profiltiefe T_{UR} die Tiefe der tiefsten Umfangsrille 3, 3`, 4 verstanden.

Die Ausgestaltung der mittleren Profilrippen 1, 2 ist derart, dass der Laufstreifen bezüglich der Reifenäquatorialebene (Linie A-A) eine asymmetrische Gestalt aufweist, wobei der Fahrzeugluftreifen bevorzugter Weise derart auf der Achse eines Fahrzeuges, etwa einem PKW, zu montieren ist, dass die mittlere Profilrippe 2 der Fahrzeuginnenseite FI zugewandt ist.

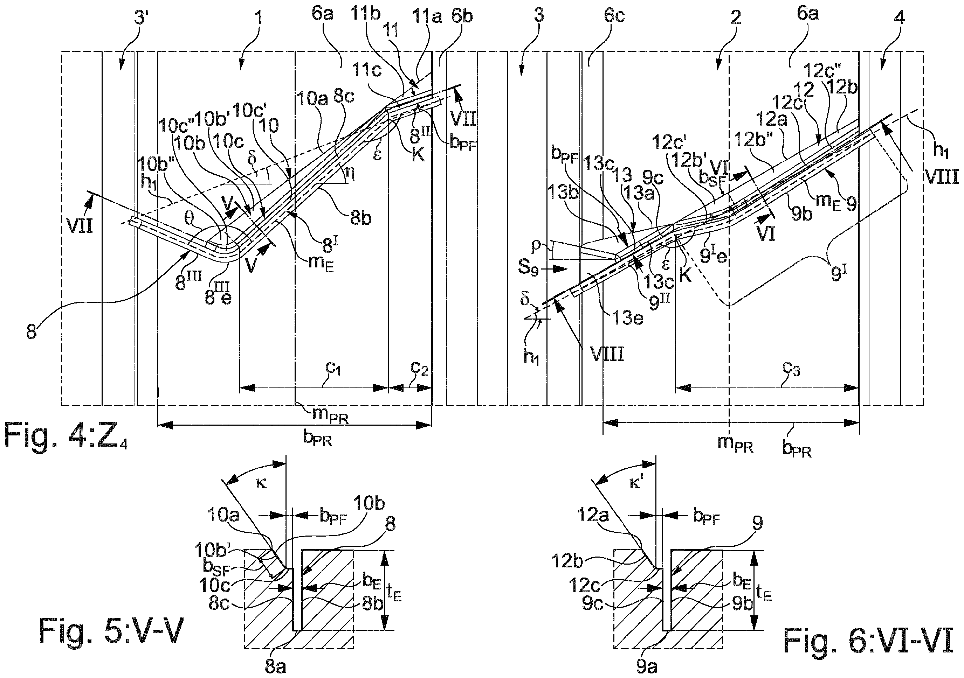

Die Profilrippe 1, 2 weist eine in der Laufstreifenperipherie liegende Rippenaußenfläche 6a, eine an dieser in axialer Richtung ermittelte Breite b_{PR} sowie eine die Breite b_{PR} halbierende, in Umfangsrichtung verlaufende Rippenmittellinie m_{PR} (Fig. 4) auf und ist an ihrer einen Seite, im montierten Zustand des Reifens in Richtung Fahrzeuginnenseite FI, zur angrenzenden Umfangsrille 3 bzw. 4 durch eine an der Rippenaußenfläche 6a scharfkantige Rippenflanke 6b und an ihrer anderen Seite, im montierten Zustand des Reifens in Richtung Fahrzeugaußenseite FA, zur angrenzenden Umfangsrille 3' bzw. 3 durch eine zur Rippenaußenfläche 6a verrundete Rippenflanke 6c begrenzt.

Die weiteren Erläuterungen zu den Rippenflanken 6b, 6c beziehen sich auf den in Draufsicht in axialer Richtung verlaufenden Querschnitt. Gemäß Fig. 2 und Fig. 3 setzt sich die Rippenflanke 6b, 6c aus einer radial inneren Übergangsrundung 6b', 6c`, einem mittleren Flankenabschnitt 6b", 6c" und einem radial äußeren Flankenabschnitt 6b‴ (Fig. 3: Rippenflanke 6b) bzw. einer radial äußeren Übergangsrundung 6c‴ (Rippenflanke 6c) zusammen. Die radial innere Übergangsrundung 6b`, 6c' schließt tangential an den Rillengrund 5 an. Der mittlere Flankenabschnitt 6b", 6c" verläuft zur radialen Richtung unter einem Winkel α (Fig. 3: Flankenabschnitt 6b") von 18° bis 22° bzw. einem Winkel β (Flankenabschnitt 6c") von 2° bis 6°. Der radial äußere Flankenabschnitt 6b‴ verläuft zur radialen Richtung einem Winkel γ (Fig. 3) von 0° bis 3° und schließt in radialer Richtung in einer Tiefe t₁ (Fig. 3) von 1,5 mm bis 2,5 mm an den mittleren Flankenabschnitt 6b" (Fig. 3) an. Die radial äußere Übergangsrundung 6c‴ schließt tangential an die Rippenaußenfläche 6a und in einer in radialer Richtung ermittelten Tiefe t₂ von 1,5 mm bis 2,5 mm tangential an den mittleren Flankenabschnitt 6c" an und ist vorzugsweise entlang eines Radius r₂ gerundet.

Wie Fig. 1 ferner zeigt, ist die Profilrippe 1, 2 mit einer Anzahl von in Umfangsrichtung aufeinanderfolgenden, in die Umfangsrillen 3, 3' (Profilrippe 1) bzw. die Umfangsrillen 3, 4 (Profilrippe 2) einmündenden, daher durchquerenden, in Draufsicht parallel zueinander verlaufenden Einschnitten 8 (Profilrippe 1), 9 (Profilrippe 2) versehen. An jeden Einschnitt 8 grenzen an der einen Seite zwei oberflächliche fasenartige Erweiterungen 10, 11 an und an jeden Einschnitt 9 grenzen an der einen Seite zwei oberflächliche fasenartige Erweiterungen 12, 13 an.

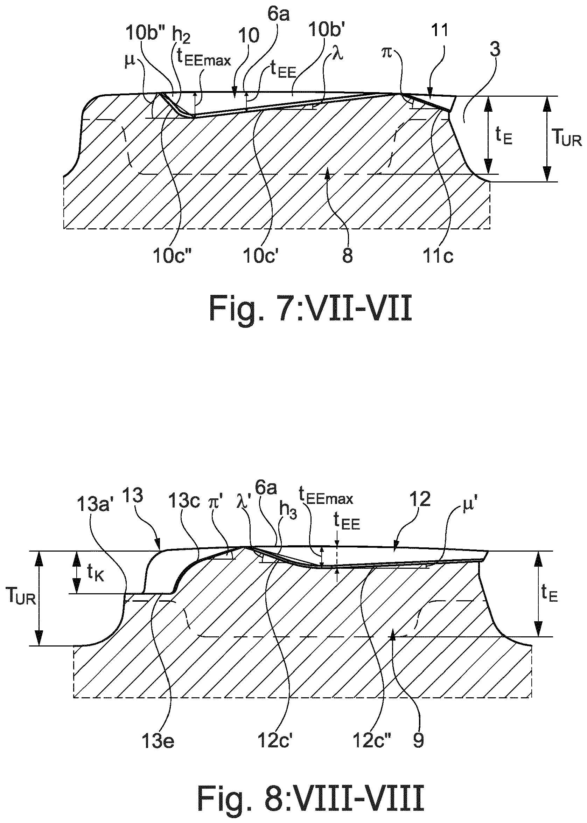

Die Einschnitte 8, 9 verlaufen, betrachtet in Draufsicht und bei vertikal verlaufender Reifenäquatorialebene (Linie A-A), rechtssteigend, weisen gemäß Fig. 4 jeweils eine in Draufsicht dem Einschnittverlauf folgende Einschnittmittellinie m_{E} auf, verlaufen ferner - bezogen auf eine die Enden ihrer Einschnittmittellinie mε verbindende gerade Hilfslinie h₁ (bei Profilrippe 2 aus Übersichtsgründen an den Endabschnitten doppelt bezeichnet) - zur axialen Richtung jeweils unter einem Winkel δ von 10° bis 40°, insbesondere von 15° bis 35°, wobei in Umfangsrichtung aufeinanderfolgende Einschnitte 8 bzw. 9 - bezogen auf ihre Einschnittmittellinien m_{E} - kleinstmögliche in Umfangsrichtung ermittelte gegenseitige Abstände a₁ (Fig. 1) von vorzugsweise 20,0 mm bis 40,0 mm aufweisen. Wie Fig. 5 und Fig. 6 zeigen, ist jeder Einschnitt 8, 9 durch einen Einschnittgrund 8a bzw. 9a und zwei in radialer Richtung verlaufende Einschnittwände 8b, 8c bzw. 9b, 9c begrenzt, wobei jeder Einschnitt 8, 9 zwischen den Einschnittwänden 8b, 8c bzw. 9b, 9c eine konstante Breite b_{E} von 0,4 mm bis 2,0 mm, insbesondere von bis 1,6 mm, bevorzugt von bis 1,2 mm, besonders bevorzugt von 0,6 mm bis 1,0 mm, und ferner zumindest über den Großteil seiner Erstreckung in radialer Richtung eine maximale Tiefe t_{E} (Tiefe an der tiefsten Stelle) von 70% bis 100% der Profiltiefe T_{UR} (vergl. Fig. 7, Fig. 8; Einschnittkontur gestrichelt angedeutet) aufweist. Bevorzugt beträgt die maximale Tiefe t_{E} höchstens der um 0,5 mm verringerten Profiltiefe T_{UR}. Wie Fig. 7 und Fig. 8 zeigen, weisen die Einschnitte 8, 9 beim Ausführungsbeispiel in an sich bekannter Weise in radialer Richtung angehobene Randbereiche auf, alternativ können die Einschnitte 8, 9 über ihre gesamte Erstreckung auf die maximale Tiefe t_{E} reichen.

Die weitere Ausgestaltung der Einschnitte 8, 9 wird nachfolgend anhand einzelner Einschnitte 8, 9 erläutert, wobei zunächst auf einige Gemeinsamkeiten der Einschnitte 8, 9 und nachfolgend auf die spezielle Ausgestaltung des Einschnittes 8 und im Anschluss auf die spezielle Ausgestaltung des Einschnittes 9 näher eingegangen wird.

Gemäß Fig. 4 weist der Einschnitt 8, 9, in Draufsicht betrachtet, einen sich über den Großteil des Einschnittes 8, 9, also über den Großteil der Länge der Einschnittmittellinie mε, erstreckenden, die jeweilige Rippenmittellinie m_{PR} passierenden Einschnittabschnitt 8^{I}, 9^{I} und einen an diesen anschließenden, in die mittlere Umfangsrille 3 einmündenden Einschnittabschnitt 8^{II}, 9^{II} auf. Der Einschnittabschnitt 8^{I}, 9^{I} schließt mit dem Einschnittabschnitt 8^{II}, 9^{II} - bezogen auf die Einschnittmittellinie mε - einen Winkel ε von 150° bis 170°, insbesondere von 155° bis 168°, ein, sodass der Einschnitt 8, 9 am Anschluss des Einschnittabschnittes 8^{I}, 9^{I} an den Einschnittabschnitt 8^{II}, 9^{II} an der Einschnittmittellinie mε eine Knickstelle K aufweist. Die Einschnittwand 8b, 9b verläuft über die Innenseite der Knickstelle K und die Einschnittwand 8c, 9c verläuft über die Außenseite der Knickstelle K. An der Außenseite der Knickstelle K schließen die Einschnittabschnitte 8^{I}, 8^{II} bzw. 9^{I}, 9^{II} - bezogen auf die Einschnittmittellinie mε - einen Winkel größer 180° ein und an der Innenseite der Knickstelle schließen die Einschnittabschnitte 8^{I}, 8^{II} bzw. 9^{I}, 9^{II} den erwähnten Winkel ε ein. Der Einschnitt 8 setzt sich aus dem Einschnittabschnitt 8^{I}, dem Einschnittabschnitt 8^{II} und einem in die Umfangsrille 3' einmündenden Einschnittabschnitt 8^{III} zusammen. Der Einschnitt 9 setzt aus dem Einschnittabschnitt 9^{I} und dem einmündenden Einschnittabschnitt 9^{II} zusammen.

Nachfolgend wird die spezielle Ausgestaltung des Einschnittes 8 weiter erläutert.

Der Einschnittabschnitt 8^{I} verläuft, in Draufsicht betrachtet und bezogen auf die Einschnittmittellinie mε, gerade sowie zur axialen Richtung unter einem Winkel η von 40° bis 50° und weist, bezogen auf die Einschnittmittellinie mε, eine am Niveau der Rippenaußenfläche 6a ermittelte, in axialer Richtung projizierte Länge c₁ von 45% bis 60%, insbesondere von 50% bis 55%, der Breite b_{PR} der Profilrippe 1 auf. Der Einschnittabschnitt 8^{II} verläuft, in Draufsicht betrachtet und bezogen auf die Einschnittmittellinie mε, gerade, ist bezüglich der axialen Richtung gleichsinnig zum Einschnittabschnitt 8^{I} geneigt und weist eine am Niveau der Rippenaußenfläche 6a ermittelte, in axialer Richtung projizierte Länge c₂ von zumindest 2,0 mm, insbesondere von zumindest 2,5 mm, auf. Der Einschnittabschnitt 8^{III} verläuft, in Draufsicht betrachtet und bezogen auf die Einschnittmittellinie mε, ausgehend von der Umfangsrille 3` über den Großteil seiner Erstreckung gerade, ist bezüglich der axialen Richtung gegensinnig zum Einschnittabschnitt 8^{I} geneigt, schließt mit diesem - bezogen auf die Einschnittmittellinie mε - einen Winkel θ von 100° bis 120° ein und weist einen unmittelbar an den Einschnittabschnitt 8^{I} angrenzenden, bogenförmig verlaufenden Übergangsbereich 8^{III}e auf.

Die fasenartige Erweiterung 10 ist in Draufsicht parallel zur Einschnittmittellinie m_{E} langgestreckt, ist an der über die Außenseite der Knickstelle K verlaufenden Einschnittwand 8c ausgebildet, verläuft über den gesamten Einschnittabschnitt 8^{I}, endet am Einschnittabschnitt 8^{III}, weist an der Rippenaußenfläche 6a eine in Draufsicht gerade verlaufende Begrenzungskante 10a auf und ist durch eine von der Begrenzungskante 10a ausgehende Schrägfläche 10b (vergl. Fig. 5) und eine an diese anschließende, zur Einschnittwand 8c reichende, in Draufsicht entlang der Einschnittmittellinie mε langgestreckte Plateaufläche 10c (vergl. Fig. 5) begrenzt, wobei am gegenseitigen Anschluss der Schrägfläche 10b an die Plateaufläche 10c eine in Fig. 4 und Fig. 5 kaum sichtbare, optionale Übergangsrundung ausgebildet ist.

Die Schrägfläche 10b verläuft, im in Draufsicht senkrecht zum im Bereich des Einschnittabschnittes 8^{I} verlaufenden Abschnitt der Einschnittmittellinie mε verlaufenden Querschnitt betrachtet (vergl. Lage der Schnittlinie V-V in Fig. 4), zur radialen Richtung unter einem Winkel κ (Fig. 5) von 25° bis 45°, insbesondere von 30° bis 40°, wobei der Winkel κ konstant ist oder über die Erstreckung der Schrägfläche 10b um bis zu 4° variiert, sodass die Schrägfläche 10b eine sich verdrehende Fläche sein kann. Gemäß Fig. 4 setzt sich die Schrägfläche 10b, in Draufsicht betrachtet, aus einem vom Bereich der Knickstelle K ausgehenden, den Großteil der Schrägfläche 10b einnehmenden, den gesamten Einschnittabschnitt 8^{I} entlangverlaufenden, langezogen dreieckigen Schrägflächenabschnitt 10b' und einem gegenüberliegend zum Übergangsbereich 8^{III}e ausgebildeten, kreissektorförmigen Schrägflächenabschnitt 10b" zusammen. Der Schrägflächenabschnitt 10b` weist, im erwähnten Querschnitt betrachtet, eine Breite b_{SF} (Fig. 5) auf, welche ausgehend vom Schrägflächenabschnitt 10b" über den Einschnittabschnitt 8^{I} kontinuierlich abnimmt, wobei der Schrägflächenabschnitt 10b' am an der Knickstelle K des Einschnittes 8 liegenden Ende der Begrenzungskante 10a an der Rippenaußenfläche 6a ausläuft.

Wie Fig. 4 in Kombination mit Fig. 5 zeigt, weist die Plateaufläche 10c eine konstante Breite b_{PF} (Fig. 5) von 0,4 mm bis 0,8 mm auf und setzt sich gemäß Fig. 4, in Draufsicht betrachtet, aus einem über den gesamten Einschnittabschnitt 8^{I} und daher über den langezogen dreieckigen Schrägflächenabschnitt 10b' reichenden, gerade verlaufenden, langgezogen, rechteckigen Plateauflächenabschnitt 10c` und einen über den Übergangsbereich 8^{III}e und daher den kreissektorförmigen Schrägflächenabschnitt 10b" reichenden, bogenförmigen Plateauflächenabschnitt 10c" zusammen.

Gemäß Fig. 7 verläuft der Plateauflächenabschnitt 10c', betrachtet im in Draufsicht parallel zur Einschnittmittellinie mε verlaufenden Längsschnitt (vergl. Lage der Schnittlinie VII-VII in Fig. 4), relativ zur Rippenaußenfläche 6a unter einem konstanten Winkel λ, wobei die Neigung des Plateauflächenabschnittes 10c' derart ist, dass die fasenartige Erweiterung 10 im Bereich des Plateauflächenabschnittes 10c` eine in radialer Richtung ermittelte Tiefe t_{EE} aufweist, welche ausgehend vom Plateauflächenabschnitt 10c" über die Erstreckung des Plateauflächenabschnittes 10c` kontinuierlicher abnimmt, wobei der Plateauflächenabschnitt 10c' am an der Knickstelle K des Einschnittes 8 liegenden Ende der Begrenzungskante 10a am Niveau der Rippenaußenfläche 6a endet (vergl. Fig. 4). Der Plateauflächenabschnitt 10c" verläuft, betrachtet im erwähnten Längsschnitt, relativ zur Rippenaußenfläche 6a zumindest abschnittsweise bogenförmig nach innen gewölbt sowie - bezogen auf eine seine Enden verbindende gerade Hilfslinie h₂ - relativ zur Rippenaußenfläche 6a unter einem von Winkel µ von 40° bis 50° und schließt tangential ("knickfrei") an den Plateauflächenabschnitt 10c' an. Die Erweiterung 10 weist am gegenseitigen Anschluss der Plateauflächenabschnitte 10c', 10c" ihre tiefste Stelle auf, sodass die Tiefe t_{EE} an dieser Stelle ihren größten Wert t_{EEmax} von 1,5 mm bis 2,5 mm besitzt.

Gemäß Fig. 4 ist die fasenartige Erweiterung 11 in Draufsicht parallel zur Einschnittmittellinie mε langgestreckt, ist ebenfalls an der über die Außenseite der Knickstelle K verlaufende Einschnittwand 8c ausgebildet, verläuft über den gesamten Einschnittabschnitt 8^{II}, reicht bis zur Umfangsrille 3, weist an der Rippenaußenfläche 6a eine in Draufsicht gerade, sowie in Verlängerung der Begrenzungskante 10a verlaufende Begrenzungskante 11a auf und ist durch eine von der Begrenzungskante 11a ausgehende, langgezogen dreieckige Schrägfläche 11b und eine an diese anschließende, zur Einschnittwand 8c reichende, in Draufsicht entlang der Einschnittmittellinie mε langgestreckte Plateaufläche 11c begrenzt, wobei am gegenseitigen Anschluss der Schrägfläche 11b an die Plateaufläche 11c eine optionale Übergangsrundung ausgebildet ist (in Fig. 4 kaum sichtbar).

Die Schrägfläche 11b verläuft, im in Draufsicht senkrecht zur Einschnittmittellinie mε verlaufenden Querschnitt betrachtet (nicht gezeigt), zur radialen Richtung unter einem Winkel von 25° bis 45°, insbesondere von 30° bis 40°, wobei der Winkel konstant ist oder über die Erstreckung der Schrägfläche 11b um bis zu 4°, insbesondere um bis zu 2° variiert, und weist, im erwähnten Querschnitt betrachtet, eine Breite auf, welche ausgehend von der Umfangsrille 3 kontinuierlich abnimmt, wobei die Schrägfläche 11b am an der Knickstelle K des Einschnittes 8 liegenden Ende der Begrenzungskante 11a an der Rippenaußenfläche 6a ausläuft.

Die Plateaufläche 11c weist die gleiche Breite wie die Plateaufläche 10c und daher die konstante Breite b_{PF} auf. Gemäß Fig. 7 schließt die Plateaufläche 11c rippeninnenseitig am Niveau der Rippenaußenfläche 6a an den Plateauflächenabschnitt 10c' an, wobei die Plateaufläche 11c, im in Draufsicht parallel zur Einschnittmittellinie mε verlaufenden Längsschnitt betrachtet, relativ zur Rippenaußenfläche 6a unter einem konstanten Winkel π verläuft, sodass die Erweiterung 11 im Bereich des Plateaufläche 11c eine in radialer Richtung ermittelte Tiefe aufweist, welche ausgehend von der Umfangsrille 3 abnimmt und an der tiefsten Stelle der Erweiterung 11 ihren größten Wert von 1,0 mm bis 2,0 mm aufweist.

Nachfolgend wird die spezielle Ausgestaltung des Einschnittes 9 weiter erläutert.

Gemäß Fig. 4 verläuft der Einschnittabschnitt 9^{I}, in Draufsicht betrachtet und bezogen auf die Einschnittmittellinie mε, ausgehend von der Umfangsrille 4 über den Großteil seiner Erstreckung gerade, weist - bezogen auf die Einschnittmittellinie mε - eine am Niveau der Rippenaußenfläche 6a ermittelte, in axialer Richtung projizierte Länge c₃ von 60% bis 80%, insbesondere von 65% bis 75%, der Breite b_{PR} der Profilrippe 2 sowie einen von der Knickstelle K ausgehenden, in Draufsicht zumindest abschnittsweise leicht bogenförmig verlaufenden Übergangsbereich 9'e auf. Der Einschnittabschnitt 9^{II} verläuft, in Draufsicht betrachtet und bezogen auf die Einschnittmittellinie mε, gerade und ist bezüglich der axialen Richtung gleichsinnig zum Einschnittabschnitt 9^{I} geneigt.

Die fasenartige Erweiterung 12 ist in Draufsicht parallel zur Einschnittmittellinie m_{E} langgestreckt, ist an der über die Außenseite der Knickstelle K verlaufenden Einschnittwand 9c ausgebildet, verläuft über den gesamten Einschnittabschnitt 9', weist an der Rippenaußenfläche 6a eine in Draufsicht gerade verlaufende Begrenzungskante 12a auf und ist durch eine von der Begrenzungskante 12a ausgehende Schrägfläche 12b (vergl. Fig. 6) und eine an diese anschließende, zur Einschnittwand 9c (vergl. Fig. 6) reichende, in Draufsicht entlang der Einschnittmittellinie mε langgestreckte Plateaufläche 12c (vergl. Fig. 6) begrenzt, wobei am gegenseitigen Anschluss der Schrägfläche 12b an die Plateaufläche 12c eine in Fig. 4 und Fig. 6 kaum sichtbare, optionale Übergangsrundung ausgebildet ist.

Die nachfolgenden Erläuterungen zur Schrägfläche 12b beziehen sich auf den Querschnitt durch die Schrägfläche 12b, wobei der Querschnitt in Draufsicht senkrecht zu jenem Abschnitt der Einschnittmittellinie mε orientiert ist, welcher im Einschnittabschnitt 9^{I} außerhalb des Übergangsbereiches 9^{I}e liegt. Im an den Übergangsbereich 9^{I}e angrenzenden Teil der Schrägfläche 12b verläuft der Querschnitt daher senkrecht zu einer gedachten Verlängerung des erwähnten Abschnittes der Einschnittmittellinie mε. Gemäß Fig. 6 verläuft die Schrägfläche 12b, im erwähnten Querschnitt betrachtet, zur radialen Richtung unter einem Winkel κ' von 25° bis 45°, insbesondere von 30° bis 40°, wobei der Winkel κ' konstant ist oder über die Erstreckung der Schrägfläche 12b um bis zu 4° variiert. Die Schrägfläche 12b setzt sich, in Draufsicht betrachtet, aus einem vom Bereich der Knickstelle K ausgehenden, über den Übergangsbereich 9^{I}e reichenden, langezogen dreieckigen Schrägflächenabschnitt 12b' und einem den Großteil der Schrägfläche 12b einnehmenden langgezogenen, rechteckförmigen Schrägflächenabschnitt 12b" zusammen. Der Schrägflächenabschnitt 12b` weist, im erwähnten Querschnitt betrachtet, eine Breite b_{SF} (angedeutet in Fig. 4) auf, welche ausgehend vom Schrägflächenabschnitt 12b" über den Übergangsbereich 9^{I}e kontinuierlich abnimmt, wobei der Schrägflächenabschnitt 12b` am an der Knickstelle K des Einschnittes 8 liegenden Ende der Begrenzungskante 12a an der Rippenaußenfläche 6a ausläuft.

Wie Fig. 4 in Kombination mit Fig. 6 zeigt, weist die Plateaufläche 12c die gleiche Breite wie die Plateaufläche 10c und daher die konstante Breite b_{PF} (Fig. 6) auf und setzt sich gemäß Fig. 4, in Draufsicht betrachtet, aus einem über den langezogen dreieckigen Schrägflächenabschnitt 12b' und daher über den Übergangsbereich 9^{I}e reichenden Plateauflächenabschnitt 12c' und einem langgezogen rechteckigen Plateauflächenabschnitt 12c" zusammen. Gemäß Fig. 8 verläuft der Plateauflächenabschnitt 12c`, betrachtet im in Draufsicht parallel zur Einschnittmittellinie mε verlaufenden Längsschnitt (vergl. Lage der Schnittlinie VIII-VIII in Fig. 4), zumindest abschnittsweise bogenförmig nach innen gewölbt sowie - bezogen auf eine seine Enden verbindende gerade Hilfslinie h₃ - relativ zur Rippenaußenfläche 6a unter einem von Winkel λ' von 10° bis 20°, schließt tangential ("knickfrei") an den Plateauflächenabschnitt 12c" an und endet am Niveau der Rippenaußenfläche 6a. Der Plateauflächenabschnitt 12c" verläuft, im erwähnten Längsschnitt betrachtet, relativ zur Rippenaußenfläche 6a unter einem konstanten Winkel µ', wobei die Neigung des Plateauflächenabschnittes 12c" derart ist, dass die Erweiterung 12 im Bereich des Plateauflächenabschnittes 12c" eine in radialer Richtung ermittelte Tiefe t_{EE} aufweist, welche ausgehend vom Plateauflächenabschnitt 12c' über die Erstreckung des Plateauflächenabschnittes 12c" kontinuierlicher abnimmt. Die Erweiterung 12 weist am gegenseitigen Anschluss des Plateauflächenabschnittes 12c' und des Plateauflächenabschnitt 12c" ihre tiefste Stelle auf, sodass die Tiefe t_{EE} an dieser Stelle ihren größten Wert t_{EEmax} von 1,5 mm bis 2,5 mm aufweist.

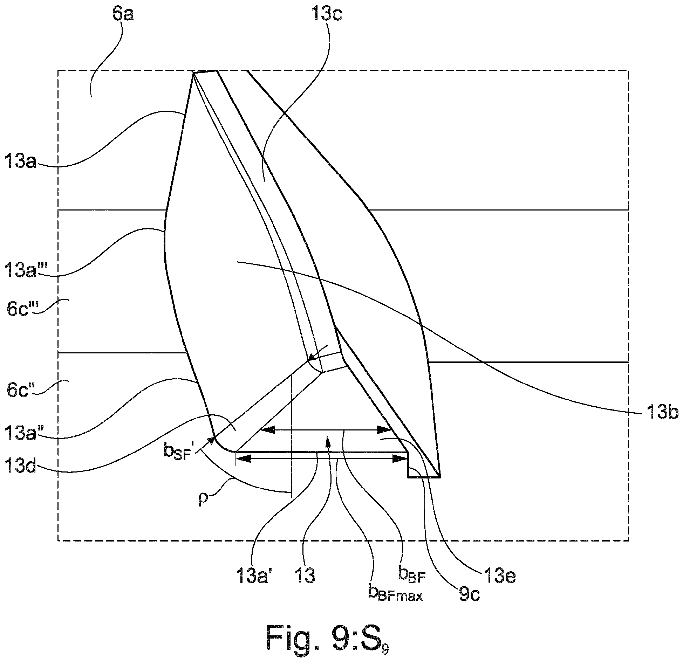

Gemäß Fig. 4 ist die fasenartige Erweiterung 13 an der über die Außenseite der Knickstelle K verlaufenden Einschnittwand 9c ausgebildet, wobei die Erweiterung 13 in Draufsicht parallel zur Einschnittmittellinie mε langgestreckt ist, über den gesamten Einschnittabschnitt 9^{II} verläuft und daher bis zur Umfangsrille 3 reicht. Wie Fig. 9 zeigt, weist die Erweiterung 13 eine an der Rippenaußenfläche 6a liegende, gerade verlaufende, radial äußere Begrenzungskante 13a, eine an diese tangential (knickfrei) anschließende, bogenförmig über die Übergangsrundung 6c‴ verlaufende Begrenzungskante 13a‴, eine an diese tangential anschließende, am mittleren Flankenabschnitt 6c" ausgebildete, gerade verlaufende Begrenzungskante 13a" und eine diese anschließende, ebenfalls am mittleren Flankenabschnitt 6c" liegende, radial innere Begrenzungskante 13a' auf, wobei die radial innere Begrenzungskante 13a` gemäß Fig. 8 in einer gegenüber dem Niveau der Rippenaußenfläche 6a in radialer Richtung ermittelten konstanten Tiefe t_{K} von 3,0 mm bis 4,0 mm verläuft.

Wie Fig. 9 ferner zeigt, ist die Erweiterung 13 durch eine von den Begrenzungskanten 13a, 13a‴, 13a" ausgehende, in Draufsicht entlang der Begrenzungskanten 13a, 13a‴, 13a" langgezogene Schrägfläche 13b, eine an diese anschließende, zur Einschnittwand 9c reichende, in Draufsicht entlang der Einschnittmittellinie m_{E} langgezogen rechteckige Plateaufläche 13c (vergl. Fig. 4) und eine von der Begrenzungskante 13a' ausgehende, in der Tiefe t_{K} (Fig. 8) verlaufende, in Draufsicht dreieckige, an die Schrägfläche 13b und die Plateaufläche 13c anschließende, zur Einschnittwand 9c reichende Bodenfläche 13e (vergl. Fig. 4) begrenzt. Am gegenseitigen Anschluss der Schrägfläche 13b an die Bodenfläche 13e ist beim Ausführungsbeispiel eine Übergangsrundung 13d ausgebildet.

Die Bodenfläche 13e weist eine in Umfangsrichtung ermittelte, ausgehend von der Begrenzungskante 13a' kontinuierlich abnehmende Breite b_{BF} auf, deren größter Wert b_{BFmax} 2,5 mm bis 4,5 mm, insbesondere 2,9 mm bis 3,9 mm, beträgt.

Die Schrägfläche 13b ist, in Draufsicht betrachtet (Fig. 2), dreieckig, läuft entlang der radial äußeren Begrenzungskante 13a zum an der Knickstelle K (Fig. 2) des Einschnittes 9 liegenden Ende der Begrenzungskante 13a aus, ist im Bereich der bogenförmig über die Übergangsrundung 6c‴ verlaufenden Begrenzungskante 13a‴ nach außen gebogen und ansonsten eben ausgeführt und verdreht sich über die Erstreckung der Begrenzungskante 13a‴ derart, dass sie an ihrem der Bodenfläche 13e zugewandten Ende, in Draufsicht betrachtet, zur axialen Richtung unter einem Winkel ρ (vergl. Fig. 4) von 5° bis 25°, insbesondere von 10° bis 20°, verläuft. Die Schrägfläche 13b weist an ihrem der Bodenfläche 13e zugewandten Ende eine Breite b_{SF}' von 2,5 mm bis 4,0 mm, insbesondere von 2,8 mm bis 3,8 mm, auf.

Gemäß Fig. 8 schließt die Plateaufläche 13c an den Plateauflächenabschnitt 12c' an, verläuft ausgehend von Plateauflächenabschnitt 12c`, betrachtet im in Draufsicht parallel zur Einschnittmittellinie mε verlaufenden Längsschnitt (vergl. Lage der Schnittlinien VIII-VIII in Fig. 2), zunächst abschnittsweise zur radialen Richtung unter einem konstanten Winkel π' und anschließend abschnittsweise nach außen gebogen bis zur Bodenfläche 13e, wobei die Plateaufläche 13c ebenfalls die bereits erwähnte konstante Breite b_{PF} (Fig. 4) aufweist.

Die Erfindung ist auf das beschriebene Ausführungsbeispiel nicht beschränkt.

Der Laufstreifen weist zumindest eine mittlere Profilrippe mit entsprechenden Einschnitten auf. Insbesondere können innerhalb einer mittleren Profilrippe sowohl Einschnitte 8 als auch Einschnitte 9 vorgesehen sein.

### Bezugszeichenliste

- 1: mittlere Profilrippe
- 2: mittlere Profilrippe
- 3, 3': mittlere Umfangsrille
- 4: schulterseitige Umfangsrille
- 5: Rillengrund
- 6a: Rippenaußenfläche
- 6b: scharfkantige Rippenflanke
- 6b': radial innere Übergangsrundung
- 6b": mittlerer Flankenabschnitt
- 6b‴: radial äußerer Flankenabschnitt
- 6c: verrundete Rippenflanke
- 6c': radial innere Übergangsrundung
- 6c": mittlerer Flankenabschnitt
- 6c‴: radial äußere Übergangsrundung
- 8: Einschnitt
- 8a: Einschnittgrund
- 8b: Einschnittwand
- 8c: Einschnittwand
- 8^{I}: Einschnittabschnitt
- 8^{II}: Einschnittabschnitt
- 8^{III}: Einschnittabschnitt
- 8^{III}e: Übergangsbereich
- 9: Einschnitt
- 9a: Einschnittgrund
- 9b: Einschnittwand
- 9c: Einschnittwand
- 9^{I}: Einschnittabschnitt
- 9^{I}e: Übergangsbereich
- 9^{II}: Einschnittabschnitt
- 10: fasenartige Erweiterung
- 10a: Begrenzungskante
- 10b: Schrägfläche
- 10b': Schrägflächenabschnitt
- 10b": Schrägflächenabschnitt
- 10c: Plateaufläche
- 10c': Plateauflächenabschnitt
- 10c": Plateauflächenabschnitt
- 11: fasenartige Erweiterung
- 11a: Begrenzungskante
- 11b: Schrägfläche
- 11c: Plateaufläche
- 12: fasenartige Erweiterung
- 12a: Begrenzungskante
- 12b: Schrägfläche
- 12b': Schrägflächenabschnitt
- 12b": Schrägflächenabschnitt
- 12c: Plateaufläche
- 12c': Plateauflächenabschnitt
- 12c": Plateauflächenabschnitt
- 13: fasenartige Erweiterung
- 13a: Begrenzungskante
- 13a': Begrenzungskante
- 13a": Begrenzungskante
- 13a‴: Begrenzungskante
- 13b: Schrägfläche
- 13c: Plateaufläche
- 13d: Übergangsrundung
- 13e: Bodenfläche
- A-A: Linie (Reifenäquatorialebene)
- a₁: Abstand
- B_{UR}: Breite
- b_{PR}, b_{E}, b_{PF}: Breite
- b_{SF}, b_{SF}', b_{BF}: Breite
- b_{BFmax}: größter Wert
- c₁, c₂, c₃: Länge
- FA: Fahrzeugaußenseite
- FI: Fahrzeuginnenseite
- h₁, h₂, h₃: Hilfslinie
- K: Knickstelle
- m_{E}: Einschnittmittellinie
- m_{PR}: Rippenmittellinie
- r₂: Radius
- S₉: Pfeil (Sichtrichtung)
- T_{UR}: Profiltiefe
- t₁, t₂, t_{EE}, t_{K}: Tiefe
- t_{E}: maximale Tiefe
- t_{EEmax}: größter Wert
- Z₄: Detail
- α, β, γ, δ, ε, η, θ, κ, κ': Winkel
- λ, λ', µ, µ', π, π', ρ: Winkel

## Patentansprüche

1. Fahrzeugluftreifen mit einem Laufstreifen mit zumindest einer beidseitig durch je eine Umfangsrille (3, 3`, 4) begrenzten Profilrippe (1, 2) mit einer Rippenaußenfläche (6a) und durchquerenden, jeweils zwei Einschnittwände (8b, 8c, 9b, 9c), eine Breite (b_{E}) von 0,4 mm bis 2,0 mm und eine maximale Tiefe (t_{E}) von zumindest 70% der Profiltiefe (T_{UR}) aufweisenden Einschnitten (8, 9), welche in Draufsicht jeweils einen ersten Einschnittabschnitt (8^{I}, 9^{I}) und einen an diesen anschließenden, in die eine Umfangsrille (3, 4) einmündenden, zweiten Einschnittabschnitt (8^{II}, 9^{II}) sowie am Anschluss der Einschnittabschnitte (8^{I}, 8^{II}, 9^{I}, 9^{II}) eine Knickstelle (K) aufweisen, wobei an jedem Einschnitt (8, 9) eine von der Rippenaußenfläche (6a) ausgehende, über den gesamten ersten Einschnittabschnitt (8^{I}, 9^{I}) verlaufende, erste fasenartige Erweiterung (10, 12) und eine von der Rippenaußenfläche (6a) ausgehende, über den gesamten zweiten Einschnittabschnitt (8^{II}, 9^{II}) verlaufende, zweite fasenartige Erweiterung (11, 13) ausgebildet sind, wobei die erste und die zweite fasenartige Erweiterung (10, 11, 12, 13) jeweils eine über ihre gesamte Erstreckung reichende Schrägfläche (10b, 11b, 12b, 13b) mit einer an der Rippenaußenfläche (6a) liegenden Begrenzungskante (10a, 11a, 12a, 13a) aufweist, wobei die erste und zweite fasenartige Erweiterung (10, 11, 12, 13) an dieselbe Einschnittwand (8c, 9c) angrenzen und wobei die Begrenzungskanten (10a, 11a, 12a, 13a) der Schrägflächen (10b, 11b, 12b, 13b) an der Rippenaußenfläche (6a) aneinander anschließen,
dadurch chgekennzeichnet,
dass die Schrägflächen (10b, 11b, 12b, 13b) am gegenseitigen Anschluss der Begrenzungskanten (10a, 11a, 12a, 13a) auslaufen, wobei die erste und zweite fasenartige Erweiterung (10, 11, 12, 13) jeweils eine an die Schrägfläche (10b, 11b, 12b, 13b) anschließende, zur Einschnittwand (8c, 9b) verlaufende, in Draufsicht langgestreckte Plateaufläche (10c, 11c, 12c, 13c) mit einer Breite (b_{PF}) von 0,4 mm bis 0,8 mm aufweist, wobei die Plateaufläche (10c, 11c, 12c, 13c) am gegenseitigen Anschluss der Begrenzungskanten (10a, 11a, 12a, 13a) der Schrägflächen (10b, 11b, 12b, 13b) am Niveau der Rippenaußenfläche (6a) endet und von dort ausgehend, zumindest über einen Plateauflächenabschnitt (10c', 12c'), im Längsschnitt durch den Einschnitt (8, 9) betrachtet, ins radial Innere abfällt.

2. Fahrzeugluftreifen nach Anspruch 1, **dadurch gekennzeichnet, dass** die erste und zweite fasenartige Erweiterung (10, 11, 12, 13) an der über die Außenseite der Knickstelle (K) verlaufenden Einschnittwand (8c, 9c) ausgebildet sind.

3. Fahrzeugluftreifen nach Anspruch 1 oder 2, **dadurch gekennzeichnet, dass** der erste Einschnittabschnitt (8^{I}, 9^{I}) und der zweite Einschnittabschnitt (8^{II}, 9^{II}), in Draufsicht betrachtet und bezogen auf die Einschnittmittellinie (mε), einen Winkel (ε) von 150° bis 170°, insbesondere von 155° bis 168°, einschließen.

4. Fahrzeugluftreifen nach einem der Ansprüche 1 bis 3, **dadurch gekennzeichnet, dass** der erste Einschnittabschnitt (8^{I}, 9^{I}), in Draufsicht betrachtet, über den Großteil des Einschnittes (8, 9) verläuft und die Rippenmittellinie (m_{PR}) der Profilrippe (1, 2) passiert.

5. Fahrzeugluftreifen nach Anspruch 4, **dadurch gekennzeichnet, dass** Einschnitte (8) vorgesehen sind, welche sich in Draufsicht aus dem ersten Einschnittabschnitt (8'), dem zweiten Einschnittabschnitt (8^{II}) und einem in die andere Umfangsrille (3`) einmündenden, dritten Einschnittabschnitt (8^{III}) zusammensetzen, wobei der erste und der zweite Einschnittabschnitt (8^{I}, 8^{II}) bezüglich der axialen Richtung gleichsinnig und der dritte Einschnittabschnitt (8^{III}) zum ersten und zweiten Einschnittabschnitt (8^{I}, 8^{II}) bezüglich der axialen Richtung gegensinnig geneigt ist und wobei der erste Einschnittabschnitt (8^{I}) und der dritte Einschnittabschnitt (8^{III}), bezogen auf die Einschnittmittellinie (mε), einen Winkel (θ) von 100° bis 120° einschließen.

6. Fahrzeugluftreifen nach Anspruch 5, **dadurch gekennzeichnet, dass** die erste fasenartige Erweiterung (10) bis zum dritten Einschnittabschnitt (8^{III}) reicht.

7. Fahrzeugluftreifen nach Anspruch 5 oder 6, **dadurch gekennzeichnet, dass** der erste Einschnittabschnitt (8^{I}) - bezogen auf die Einschnittmittellinie (mε) - in Draufsicht betrachtet, zur axialen Richtung unter einem Winkel (η) von 40° bis 50° verläuft und am Niveau der Rippenaußenfläche (6a) eine in die axiale Richtung projizierte Länge (c₁) von 45% bis 60%, insbesondere von 50% bis 55%, der am Niveau der Rippenaußenfläche (6a) in axialer Richtung ermittelten Breite (b_{PR}) der Profilrippe (1) aufweist.

8. Fahrzeugluftreifen nach einem der Ansprüche 5 bis 7, **dadurch gekennzeichnet, dass** der dritte Einschnittabschnitt (8^{I}) - bezogen auf die Einschnittmittellinie (mε) - am Niveau der Rippenaußenfläche (6a) eine in die axiale Richtung projizierte Länge (c₂) von zumindest 2,0 mm, insbesondere von zumindest 2,5 mm, aufweist.

9. Fahrzeugluftreifen nach einem der Ansprüche 5 bis 8, **dadurch gekennzeichnet, dass** die Schrägfläche (10b) der ersten fasenartigen Erweiterung (10) einen den gesamten ersten Einschnittabschnitt (8^{I}) entlangverlaufenden, langezogen dreieckigen Schrägflächenabschnitt (10b`) aufweist, welcher am gegenseitigen Anschluss der Begrenzungskanten (10a, 11a, 12a, 13a) der Schrägflächen (10b, 11b) ausläuft.

10. Fahrzeugluftreifen nach Anspruch 4 bis 9, **dadurch gekennzeichnet, dass** Einschnitte (9) vorgesehen sind, welche sich in Draufsicht aus dem ersten Einschnittabschnitt (9^{I}) und dem zweiten Einschnittabschnitt (9^{II}) zusammensetzen, wobei der erste und der zweite Einschnittabschnitt (9^{I}, 9^{II}) bezüglich der axialen Richtung gleichsinnig geneigt sind.

11. Fahrzeugluftreifen nach Anspruch 10, **dadurch gekennzeichnet, dass** der erste Einschnittabschnitt (9^{I}) - bezogen auf die Einschnittmittellinie (mε) - am Niveau der Rippenaußenfläche (6a) eine in die axiale Richtung projizierte Länge (c₃) von 60% bis 80%, insbesondere von 65% bis 75%, der am Niveau der Rippenaußenfläche (6a) in axialer Richtung ermittelten Breite (b_{PR}) der Profilrippe (2) aufweist.

12. Fahrzeugluftreifen nach Anspruch 10 oder 11, **dadurch gekennzeichnet, dass** sich die Schrägfläche (12b) der ersten fasenartigen Erweiterung (12) aus einem langezogen dreieckigen Schrägflächenabschnitt (12b`), welcher am gegenseitigen Anschluss der Begrenzungskanten (12a, 13a) der Schrägflächen (12b, 13b) ausläuft, und einem den Großteil der Schrägfläche (12b) einnehmenden langgezogenen, rechteckförmigen Schrägflächenabschnitt (12b") zusammensetzt.

13. Fahrzeugluftreifen nach einem der Ansprüche 1 bis 12, **dadurch gekennzeichnet, dass** die Profilrippe (2) an der Umfangsrille (3), in welche der zweite Einschnittabschnitt (9^{II}) einmündet, eine zur Rippenaußenfläche (6a) verrundete Rippenflanke (6c) mit einer tangential an die Rippenaußenfläche (6a) anschließenden Übergangsrundung (6c‴) aufweist, wobei die zweite fasenartige Erweiterung (13) in radialer Richtung von einer zur Umfangsrille (3) reichenden Bodenfläche (13e) mit einer ausgehend von der Umfangsrille (3) kontinuierlich abnehmenden Breite (b_{PF}) mitbegrenzt ist, wobei an die an der Rippenaußenfläche (6a) liegende Begrenzungskante (13a) der Schrägfläche (13b) eine über die Übergangsrundung (6c‴) verlaufende, bogenförmige Begrenzungskante (13a‴) der Schrägfläche anschließt, wobei die Schrägfläche (13b) im an die bogenförmige Begrenzungskante (13a‴) anschließenden Bereich nach außen gebogen ist und sich entlang der bogenförmigen Begrenzungskante (13a‴) derart verdreht, dass sie an ihrem der Bodenfläche (13e) zugewandten Ende, in Draufsicht betrachtet, zur axialen Richtung unter einem Winkel (ρ) von 5° bis 25°, insbesondere von 10° bis 20°, verläuft.

14. Fahrzeugluftreifen nach einem der Ansprüche 1 bis 13, **dadurch gekennzeichnet, dass** die Einschnittwand (8b, 9b), welche der Einschnittwand (8c, 9c), an welcher die fasenartigen Erweiterungen (10, 11, 12, 13) ausgebildet sind, gegenüberliegt, an einer an der Rippenaußenfläche (6a) ausgebildeten, bis zu den Umfangsrillen (3, 3`, 4) reichenden Begrenzungskante endet.

## Claims

1. Vehicle pneumatic tyre with a tread strip with at least one profile rib (1, 2), each of which is delimited on both sides by a circumferential groove (3, 3', 4) with a rib outer surface (6a) and crossing sipes (8, 9) which each have two sipe walls (8b, 8c, 9b, 9c), a width (b_{E}) of 0.4 mm to 2.0 mm and a maximum depth (t_{E}) of at least 70% of the profile depth (Tur), and which in plan view each have a first sipe portion (8^{I}, 9^{I}) and a second sipe portion (8^{II}, 9^{II}), which is adjacent to the former and opens into the one circumferential groove (3, 4), and a vertex point (K) at the connection of the sipe portions (8^{I}, 8^{II}, 9^{I}, 9^{II}), wherein a first chamfer-like extension (10, 12) starting from the rib outer surface (6a) and running over the entire first sipe portion (8^{I}, 9^{I}) and a second chamfer-like extension (11, 13) starting from the rib outer surface (6a) and running over the entire second sipe portion (8^{II}, 9^{II}) are formed on each sipe (8, 9), wherein the first and the second chamfer-like extension (10, 11, 12, 13) each have an oblique surface (10b, 11b, 12b, 13b) extending over their entire extension with a bounding edge (10a, 11a, 12a, 13a) lying on the rib outer surface (6a), wherein the first and second chamfer-like extensions (10, 11, 12, 13) are adjacent to the same sipe wall (8c, 9c), and wherein the bounding edges (10a, 11a, 12a, 13a) of the oblique surfaces (10b, 11b, 12b, 13b) are adjacent to the rib outer surface (6a),
**characterized**
**in that** the oblique surfaces (10b, 11b, 12b, 13b) extend to the mutual connection of the bounding edges (10a, 11a, 12a, 13a), wherein the first and second chamfer-like extensions (10, 11, 12, 13) each have a plateau surface (10c, 11c, 12c, 13c) which is adjacent to the oblique surface (10b, 11b, 12b, 13b), runs to the sipe wall (8c, 9b), is elongate in plan view, and has a width (b_{PF}) of from 0.4 mm to 0.8 mm, wherein the plateau surface (10c, 11c, 12c, 13c) ends at the mutual connection of the bounding edges (10a, 11a, 12a, 13a) of the oblique surfaces (10b, 11b, 12b, 13b) at the level of the rib outer surface (6a), and, starting from there, drops into the radial interior at least over a plateau surface portion (10c', 12c'), as viewed in longitudinal section through the sipe (8, 9).

2. Vehicle pneumatic tyre according to Claim 1, **characterized in that** the first and second chamfer-like extensions (10, 11, 12, 13) are formed on the sipe wall (8c, 9c) running over the outside of the vertex point (K).

3. Vehicle pneumatic tyre according to Claim 1 or 2, **characterized in that** the first sipe portion (8^{I}, 9^{I}) and the second sipe portion (8^{II}, 9^{II}), as viewed in plan view and in relation to the sipe centre line (mε), enclose an angle (ε) of from 150° to 170°, in particular from 155° to 168°.

4. Vehicle pneumatic tyre according to one of Claims 1 to 3, **characterized in that** the first sipe portion (8^{I}, 9^{I}), as viewed in plan view, runs over most of the sipe (8, 9) and passes the rib centre line (m_{PR}) of the profile rib (1, 2).

5. Vehicle pneumatic tyre according to Claim 4, **characterized in that** sipes (8) are provided, which are composed in plan view of the first sipe portion (8^{I}), the second sipe portion (8^{II}) and a third sipe portion (8^{III}) opening into the other circumferential groove (3'), wherein the first and second sipe portions (8^{I}, 8^{II}) are tilted in the same direction with respect to the axial direction and the third sipe portion (8^{III}) is tilted in the opposite direction with respect to the first and second sipe portions (8^{I}, 8^{II}) with respect to the axial direction, and wherein the first sipe portion (8^{I}) and the third sipe (8^{III}), relative to the sipe centre line (mε), enclose an angle (θ) of from 100° to 120°.

6. Vehicle pneumatic tyre according to Claim 5, **characterized in that** the first chamfer-like extension (10) reaches as far as the third sipe portion (8^{III}).

7. Vehicle pneumatic tyre according to Claim 5 or 6, **characterized in that** the first sipe portion (8^{I}) - relative to the sipe centre line (mε) - as viewed in plan view, runs at an angle (η) of from 40° to 50° with respect to the axial direction, and, at the level of the rib outer surface (6a), has a length (c₁) projected in the axial direction of from 45% to 60%, in particular of from 50% to 55%, of the width (b_{PR}) of the profile rib (1) determined in the axial direction at the level of the rib outer surface (6a).

8. Vehicle pneumatic tyre according to one of Claims 5 to 7, **characterized in that** the third sipe portion (8^{I}) - relative to the sipe centre line (mε) - has, at the level of the rib outer surface (6a), a length (c₂) projected in the axial direction of at least 2.0 mm, in particular of at least 2.5 mm.

9. Vehicle pneumatic tyre according to one of Claims 5 to 8, **characterized in that** the oblique surface (10b) of the first chamfer-like extension (10) has an elongated triangular oblique surface portion (10b') running along the entire first sipe portion (8^{I}), which ends at the mutual connection of the bounding edges (10a, 11a, 12a, 13a) of the oblique surfaces (10b, 11b).

10. Vehicle pneumatic tyre according to Claims 4 to 9, **characterized in that** sipes (9) are provided, which are composed in plan view of the first sipe portion (9^{I}) and the second sipe portion (9^{II}), wherein the first and the second sipe portions (9^{I}, 9^{II}) are tilted in the same direction with respect to the axial direction.

11. Vehicle pneumatic tyre according to Claim 10, **characterized in that** the first sipe portion (9^{I}) - relative to the sipe centre line (m_{E}) - has, at the level of the rib outer surface (6a), a length (c₃) projected in the axial direction of from 60% to 80%, in particular of from 65% to 75%, of the width (b_{PR}) of the profile rib (2) determined in the axial direction at the level of the rib outer surface (6a).

12. Vehicle pneumatic tyre according to Claim 10 or 11, **characterized in that** the oblique surface (12b) of the first chamfer-like extension (12) is composed of an elongated triangular oblique surface portion (12b'), which ends at the mutual connection of the bounding edges (12a, 13a) of the oblique surfaces (12b, 13b), and an elongated rectangular oblique surface portion (12b") occupying the majority of the oblique surface (12b).

13. Vehicle pneumatic tyre according to one of Claims 1 to 12, **characterized in that** the profile rib (2) has a rib flank (6c), rounded to the rib outer surface (6a), with a transition rounded portion (6c‴) tangentially adjacent to the rib outer surface (6a), on the circumferential groove (3), into which the second sipe portion (9^{II}) opens, wherein the second chamfer-like extension (13) is also bounded in the radial direction by a bottom surface (13e) extending to the circumferential groove (3) with a width (b_{PF}) continuously decreasing starting from the circumferential groove (3), wherein the bounding edge (13a) of the oblique surface (13b) lying on the rib outer surface (6a) is adjoined by an arcuate bounding edge (13a‴) of the oblique surface running over the transition rounded portion (6c‴), wherein the oblique surface (13b) is bent outwards in the region adjacent to the arcuate bounding edge (13a‴) and rotates along the arcuate bounding edge (13a‴) in such a manner that, at its end facing the bottom surface (13e), viewed in plan view, it runs at an angle (ρ) of from 5° to 25°, in particular of from 10° to 20°, with respect to the axial direction.

14. Vehicle pneumatic tyre according to one of Claims 1 to 13, **characterized in that** the sipe wall (8b, 9b), which lies opposite the sipe wall (8c, 9c), on which the chamfer-like extensions (10, 11, 12, 13) are formed, ends at a bounding edge formed on the rib outer surface (6a) extending as far as the circumferential grooves (3, 3', 4).

## Revendications

1. Bandage pneumatique pour véhicule comprenant une bande de roulement avec au moins une nervure de profil (1, 2), délimitée des deux côtés à chaque fois par une rainure périphérique (3, 3', 4), avec une surface extérieure de nervure (6a) et des entailles (8, 9) traversantes, présentant respectivement deux parois d'entaille (8b, 8c, 9b, 9c), une largeur (b_{E}) de 0,4 mm à 2,0 mm et une profondeur maximale (t_{E}) égale à au moins 70 % de la profondeur du profil (T_{UR}), qui, vues de dessus, possèdent respectivement une première portion d'entaille (8^{I}, 9^{I}) et une deuxième portion d'entaille (8^{II}, 9^{II}), qui se rattache à celle-ci et dans laquelle débouche une rainure périphérique (3, 4), ainsi qu'un point de pliage (K) au niveau de la jonction des portions d'entaille (8^{I}, 8^{II}, 9^{I}, 9^{II}), un premier élargissement en forme de chanfrein (10, 12), qui part de la surface extérieure de nervure (6a) et suit un tracé sur la totalité de la première portion d'entaille (8^{I}, 9^{I}), et un deuxième élargissement en forme de chanfrein (11, 13), qui part de la surface extérieure de nervure (6a) et suit un tracé sur la totalité de la deuxième portion d'entaille (8^{II}, 9^{II}), étant formés au niveau de chaque entaille (8, 9), le premier et le deuxième élargissement en forme de chanfrein (10, 11, 12, 13) possédant respectivement une surface inclinée (10b, 11b, 12b, 13b) qui s'étend sur toute son étendue avec un bord de délimitation (10a, 11a, 12a, 13a) situé au niveau de la surface extérieure de nervure (6a), le premier et le deuxième élargissement en forme de chanfrein (10, 11, 12, 13) étant adjacents à la même paroi d'entaille (8c, 9c) et les bords de délimitation (10a, 11a, 12a, 13a) des surfaces inclinées (10b, 11b, 12b, 13b) se raccordant les uns aux autres au niveau de la surface extérieure de nervure (6a),
**caractérisé en ce**
**que** les surfaces inclinées (10b, 11b, 12b, 13b) se terminent au niveau du raccordement mutuel des bords de délimitation (10a, 11a, 12a, 13a), le premier et le deuxième élargissement en forme de chanfrein (10, 11, 12, 13) possédant respectivement une surface de plateau (10c, 11c, 12c, 13c) ayant une largeur (b_{PF}) de 0,4 mm à 0,8 mm, se raccordant à la surface inclinée (10b, 11b, 12b, 13b), qui suit un tracé vers la paroi d'entaille (8c, 9b) et étendue en longueur vue de dessus, la surface de plateau (10c, 11c, 12c, 13c) se terminant au niveau du raccordement mutuel des bords de délimitation (10a, 11a, 12a, 13a) des surfaces inclinées (10b, 11b, 12b, 13b) au niveau de la surface extérieure de nervure (6a) et, à partir de là, s'abaissant radialement vers l'intérieur, au moins sur une portion de surface de plateau (10c', 12c'), vue en coupe longitudinale à travers l'entaille (8, 9).

2. Bandage pneumatique pour véhicule selon la revendication 1, **caractérisé en ce que** les premier et deuxième élargissements en forme de chanfrein (10, 11, 12, 13) sont formés sur la paroi d'entaille (8c, 9c) qui suit un tracé sur le côté extérieur du point de pliage (K).

3. Bandage pneumatique pour véhicule selon la revendication 1 ou 2, **caractérisé en ce que** la première portion d'entaille (8^{I}, 9^{I}) et la deuxième portion d'entaille (8^{II}, 9^{II}), vues de dessus et par rapport à la ligne centrale d'entaille (m_{E}), forment un angle (ε) de 150° à 170°, en particulier de 155° à 168°.

4. Bandage pneumatique pour véhicule selon l'une des revendications 1 à 3, **caractérisé en ce que** la première portion d'entaille (8^{I}, 9^{I}), vue de dessus, suit un tracé sur la majeure partie de l'entaille (8, 9) et passe par la ligne centrale de nervure (m_{PR}) de la nervure de profil (1, 2).

5. Bandage pneumatique pour véhicule selon la revendication 4, caractérisé en ce des entailles (8) sont présentes, qui, vues de dessus, se composent de la première portion d'entaille (8^{I}), de la deuxième portion d'entaille (8^{II}) et d'une troisième portion d'entaille (8^{III}) qui débouche dans l'autre rainure périphérique (3'), la première et la deuxième portion d'entaille (8^{I}, 8^{II}) étant dans le même sens en référence à la direction axiale et la troisième portion d'entaille (8^{III}) étant inclinée en sens inverse par rapport à la première et à la deuxième portion d'entaille (8^{I}, 8^{II}) en référence à la direction axiale, et la première portion d'entaille (8^{I}) et la troisième portion d'entaille (8^{III}) formant un angle (θ) de 100° à 120° en référence à la ligne centrale d'entaille (m_{E}).

6. Bandage pneumatique pour véhicule selon la revendication 5, **caractérisé en ce que** le premier élargissement en forme de chanfrein (10) s'étend jusqu'à la troisième portion d'entaille (8^{III}).

7. Bandage pneumatique pour véhicule selon la revendication 5 ou 6, **caractérisé en ce que** la première portion d'entaille (8^{I}) - en référence à la ligne centrale d'entaille (m_{E}) - vue de dessus, suit un tracé selon un angle (η) de 40° à 50° par rapport à la direction axiale et présente, au niveau de la surface extérieure de nervure (6a), une longueur (c₁) projetée dans la direction axiale de 45 % à 60 %, notamment de 50 % à 55 %, de la largeur (b_{PR}) de la nervure de profil (1) déterminée au niveau de la surface extérieure de nervure (6a) dans la direction axiale.

8. Bandage pneumatique pour véhicule selon l'une des revendications 5 à 7, **caractérisé en ce que** la troisième portion d'entaille (8^{I}) présente - en référence à la ligne centrale d'entaille (m_{E}) - au niveau de la surface extérieure de nervure (6a), une longueur (c₂) projetée dans la direction axiale d'au moins 2,0 mm, notamment d'au moins 2,5 mm.

9. Bandage pneumatique pour véhicule selon l'une des revendications 5 à 8, **caractérisé en ce que** la surface inclinée (10b) du premier élargissement en forme de chanfrein (10) possède une portion de surface inclinée (10b') triangulaire allongée, qui suit un tracé le long de la totalité de la première portion d'entaille (8^{I}) et qui se termine au niveau du raccordement mutuel des bords de délimitation (10a, 11a, 12a, 13a) des surfaces inclinées (10b, 11b).

10. Bandage pneumatique pour véhicule selon les revendications 4 à 9, **caractérisé en ce que** des entailles (9) sont présentes, qui, vues de dessus, se composent de la première portion d'entaille (9^{I}) et de la deuxième portion d'entaille (9^{II}), la première et la deuxième portion d'entaille (9^{I}, 9^{II}) étant inclinées dans le même sens en référence à la direction axiale.

11. Bandage pneumatique pour véhicule selon la revendication 10, **caractérisé en ce que** la première portion d'entaille (9^{I}) - en référence à la ligne centrale d'entaille (m_{E}) - présente, au niveau de la surface extérieure de nervure (6a), une longueur (c₃) projetée dans la direction axiale de 60 % à 80 %, notamment de 65 % à 75 %, de la largeur (b_{PR}) de la nervure de profil (2) déterminée au niveau de la surface extérieure de nervure (6a) dans la direction axiale.

12. Bandage pneumatique pour véhicule selon la revendication 10 ou 11, **caractérisé en ce que** la surface inclinée (12b) du premier élargissement en forme de chanfrein (12) se compose d'une portion de surface inclinée (12b') triangulaire allongée, laquelle se termine au niveau du raccordement mutuel des bords de délimitation (12a, 13a) des surfaces inclinées (12b, 13b), et d'une portion de surface inclinée (12b") rectangulaire allongée qui occupe la majeure partie de la surface inclinée (12b).

13. Bandage pneumatique pour véhicule selon l'une des revendications 1 à 12, **caractérisé en ce que** la nervure de profil (2) présente, au niveau de la rainure périphérique (3) dans laquelle débouche la deuxième portion d'entaille (9^{II}), un flanc de nervure (6c) arrondi par rapport à la surface extérieure de nervure (6a), avec un arrondi de transition (6c‴) qui se raccorde tangentiellement à la surface extérieure de nervure (6a), le deuxième élargissement en forme de chanfrein (13) étant délimité conjointement, dans la direction radiale, par une surface de fond (13e) qui s'étend jusqu'à la rainure périphérique (3) et qui présente une largeur (b_{PF}) qui diminue continuellement à partir de la rainure périphérique (3), un bord de délimitation (13a‴) en forme d'arc de la surface inclinée (13b), qui suit un tracé sur l'arrondi de transition (6c‴), se raccordant au bord de délimitation (13a) de la surface inclinée qui se trouve sur la surface extérieure de nervure (6a), la surface inclinée (13b) étant courbée vers l'extérieur dans la zone qui se raccorde au bord de délimitation (13a‴) en forme d'arc et se tordant le long du bord de délimitation (13a‴) en forme d'arc de telle sorte qu'à son extrémité faisant face à la surface du sol (13e), vue de dessus, elle suit un tracé selon un angle (ρ) de 5° à 25°, notamment de 10° à 20°, en référence à la direction axiale.

14. Bandage pneumatique pour véhicule selon l'une des revendications 1 à 13, **caractérisé en ce que** la paroi d'entaille (8b, 9b), qui est opposée à la paroi d'entaille (8c, 9c) sur laquelle sont formés les élargissements en forme de chanfrein (10, 11, 12, 13), se termine au niveau d'un bord de délimitation formé sur la surface extérieure de nervure (6a) et s'étendant jusqu'aux rainures périphériques (3, 3', 4).
